# FASCICULE DE BREVET EUROPEEN

(11) **EP 1 332 449 B1**
(45) Date de publication et mention de la délivrance du brevet: **13.07.2005**
(21) Numéro de dépôt: 01963043.3
(22) Date de dépôt: 01.08.2001
(51) Int. Cl.: G06F 17/60, H04L 29/06, H04L 12/58

(54) **SYSTEME DE REGULATION DES FLUX D'ECHANGE DE COURRIER ELECTRONIQUE ET D'ACCES A L'INTERNET**
SYSTEM ZUR STEUERUNG DER AUSTAUSCHFLUSSEN FÜR ELEKTRONISCHE NACHRICHTEN UND INTERNET-ZUGANG
SYSTEM FOR REGULATING ELECTRONIC MAIL EXCHANGE FLOW AND ACCESS TO INTERNET

(30) Priorité: 03.08.2000 FR 0010258
(43) Date de publication de la demande: 06.08.2003
(73) Titulaire: FRANCE TELECOM, 75015 Paris (FR)
(72) Inventeur: CAUCHIE, Dany, F-22700 Perros Guirec (FR)
(74) Mandataire: Loisel, Bertrand
(86) Numéro de dépôt international: PCT/FR2001/002513
(87) Numéro de publication internationale: WO 2002/012975

(56) Documents cités:
- EP-A- 0 720 333
- WO-A-99/17504

## Description

L'avènement des nouvelles technologies, en particulier de la communication en réseau, a mis en exergue, voire amplifié, les qualités ou les défauts du comportement humain. Un tel état de fait est dû, en particulier, à la flexibilité et à la facilité croissante d'utilisation des systèmes d'information et de communication en réseau.

Parmi les qualités précitées, on peut citer la propension de certains utilisateurs à exposer, sur- des sites INTERNET par exemple, soit leur expérience personnelle en matière de savoir-faire dans des situations de la vie courante, le cas échéant para-professionnelle, soit en matière de savoir exister ou encore de savoir être.

De telles expériences font le plus souvent état d'appréciations relatives à des produits ou services, de solutions astucieuses à des problèmes posés par des produits de large diffusion peu performants ou imparfaits, tels que notamment les logiciels commercialisés par des éditeurs peu scrupuleux ou simplement laxistes, ou des situations diverses.
Ces appréciations se révèlent le plus souvent bénéfiques, non seulement vis-à-vis d'utilisateurs réels ou potentiels, mais également vis-à-vis des fournisseurs des produits ou services objets de ces appréciations, pourvu que ces dernières présentent un bon niveau d'objectivité, ce qui est le cas le plus souvent.

Toutefois, le comportement des auteurs faisant montre de telles qualités est rarement, sinon jamais, récompensé, en l'absence actuellement d'un système de rétribution, au moins indirecte, de ces derniers.

Au contraire, parmi les défauts précités, on peut citer la propension d'autres utilisateurs, souvent distincts des premiers exhibant ces qualités, à abuser de ces systèmes d'information et de communication en réseau.

L'un de ces abus, aux conséquences, préjudiciables croissantes, pour certains utilisateurs, de ces systèmes d'information et de communication en réseau, est l'envoi à ces derniers, par d'autres utilisateurs d'un nombre inconsidéré de messages de courrier électronique ou d'accès à un site en réseau.

En particulier, il est courant d'adresser un message de courrier électronique, non seulement à un destinataire spécifique mais également une copie de ce message de courrier électronique à toute personne mentionnée comme destinataire en copie de tout courrier antérieur par ce destinataire spécifique. Ainsi, il n'est pas rare, pour certains utilisateurs, de recevoir jusqu'à 200 ou 300 messages de courrier électronique par jour, ce qui, bien entendu, est susceptible de nuire gravement à l'efficacité de réponse de ces derniers.

Une situation comparable peut être mise en évidence relativement à l'émission de messages d'accès, ou de réponse suite à accès, à des sites d'hébergement en réseau, plus communément appelés sites INTERNET. En effet, ni les fournisseurs d'accès ni les responsables de sites d'hébergement des sites en réseau précités n'exercent un quelconque contrôle sur la nature, la fréquence ou le contenu des messages d'accès ou de réponse suite à accès transmis par leurs sites hôtes.

Ainsi, pour les mécanismes de transmission de messages électroniques, les techniques actuelles de gestion des messages de courrier électronique, encore désignés messageries personnelles, que ces mécanismes soient utilisés dans un cadre individuel ou à l'échelle d'une entreprise, n'offrent pas de solutions permettant de réaliser un contrôle effectif de la boîte aux lettres de chaque utilisateur. En effet, de par la diffusion incontrôlée des adresses électroniques, les boîtes aux lettres sont surchargées de messages de courrier électronique dont l'importance ou la pertinence n'est pas avérée. Une telle explosion du nombre de messages de courrier électronique reçus n'est pas directement contrôlable par le destinataire qui ne peut que subir une telle situation.
Une utilisation inconsidérée des systèmes de messagerie électronique apparaît notamment lorsque chacun des destinataires d'un courrier électronique émet une réponse vers l'ensemble des destinataires alors que cette réponse n'intéresse que l'émetteur initial. Il s'ensuit une pollution caractérisée de chacune des boîtes aux lettres, en particulier en cas de répétition en boucle, sans possibilité réelle de parade.

De même, pour les mécanismes d'accès aux sites en réseau, si certains sites serveurs offrent à l'heure actuelle des systèmes d'incitation, voire de récompense ou de rémunération de leurs utilisateurs, systèmes le plus souvent traduits en termes de coupons ou de points de fidélité, ces services restent propriétaires de leurs récompenses. En d'autres termes, les récompenses obtenues par un utilisateur sur un service ne sont en général utilisables que dans le cadre de ce service. Il n'existe en effet aucun service fédérateur permettant de gérer l'ensemble des récompenses acquises par un utilisateur, ce qui interdit donc à ce dernier de les utiliser à sa guise. Ainsi, les mécanismes de récompense, le cas échéant de rémunération des utilisateurs, ne concernent en aucun cas les messages de courrier électronique et leur bonne utilisation. Ils concernent uniquement la rémunération ou la récompense d'utilisateurs pour un travail exécuté pour le compte du fournisseur de service. A titre d'exemple, certains fournisseurs de service rémunèrent les utilisateurs qui déposent des contributions sur leurs sites INTERNET. La récompense, en termes de rémunération, n'est qu'une contrepartie du trafic que ces contributions engendrent. Une telle rémunération est donc toujours fonction de ce que ces contributions apportent au fournisseur de service lui-même. Jamais un utilisateur ne reçoit de rémunération pour son propre travail ni pour son savoir-faire.

La demande de brevet EP 0720 333 décrit un système de courrier électronique avec filtres de messages à la fois côté transmetteur et côté récepteur.

La présente invention a pour objet de remédier aux inconvénients des mécanismes de transmission de messages électroniques, respectivement des mécanismes d'accès aux sites en réseau.

En particulier, un objet de la présente invention est la mise en oeuvre d'un système fédérateur unifié permettant à la fois d'inciter à la régulation des flux et des échanges de messages de courrier électronique ou d'accès, ou de réponse suite à accès, de sites en réseau.

Un autre objet de la présente invention est la mise en oeuvre d'un système fédérateur unifié permettant, outre la régulation des flux et des échanges précités, une incitation à la consultation de sites en réseau par un système d'attribution de récompenses.

De manière plus spécifique, relativement au mécanisme d'échange de messages électroniques, un autre objet de la présente invention est de permettre à tout utilisateur de réguler les arrivages de messages de courrier électronique dans sa boîte aux lettres ainsi que de réguler ses émissions de messages de courrier électronique en tenant compte notamment des souhaits et desiderata de ses correspondants, suite à la réception de messages de courrier électronique antérieurs émanant de ces derniers.

Relativement au mécanisme d'échange de messages d'accès, ou de réponse suite à accès, de sites en réseau, un autre objet de la présente invention est de favoriser l'accès à des sites en réseau spécifiques par l'introduction de paramètres de comportement, tel que la fidélité, ces paramètres de comportement n'étant toutefois pas liés au site en réseau considéré mais au contraire gérés par le seul réseau et donc utilisables sur l'ensemble de ce réseau ou sur une partie substantielle de ce dernier.

Le système de régulation des flux d'échanges de messages de courrier électronique et/ou d'accès à un site en réseau, objet de la présente invention, est remarquable en ce qu'il comporte au moins, implantés au niveau des serveurs d'accès, un module de contrôle de réception de messages, par un destinataire, permettant, lors de la réception de tout message, de déclencher une action spécifique, de régulation de réception des messages en fonction de l'origine de ces messages et un module de contrôle d'émission de messages, par un émetteur, permettant, lors de l'émission de tout message à l'attention d'au moins un destinataire, de déclencher une action spécifique de régulation d'émission de messages, en fonction de critères de choix de ces destinataires.

Le système de régulation des flux d'échanges de messages de courrier électronique et/ou d'accès à un site en réseau, objet de l'invention, sera mieux compris à la lecture de la description et à l'observation des dessins ci-après dans lesquels :
- la figure 1 représente, à titre d'exemple non limitatif, l'architecture d'un système de régulation des flux d'échange de courrier électronique et d'accès à un site en réseau, conforme à l'objet de la présente invention ;
- la figure 2a représente, à titre illustratif, un mode de réalisation particulier non limitatif d'un module de contrôle de réception de messages électroniques, conforme à l'objet de la présente invention ;
- la figure 2b représente, à titre illustratif, un mode de réalisation particulier non limitatif d'un module de contrôle d'émission de messages électroniques, conforme à l'objet de la présente invention.

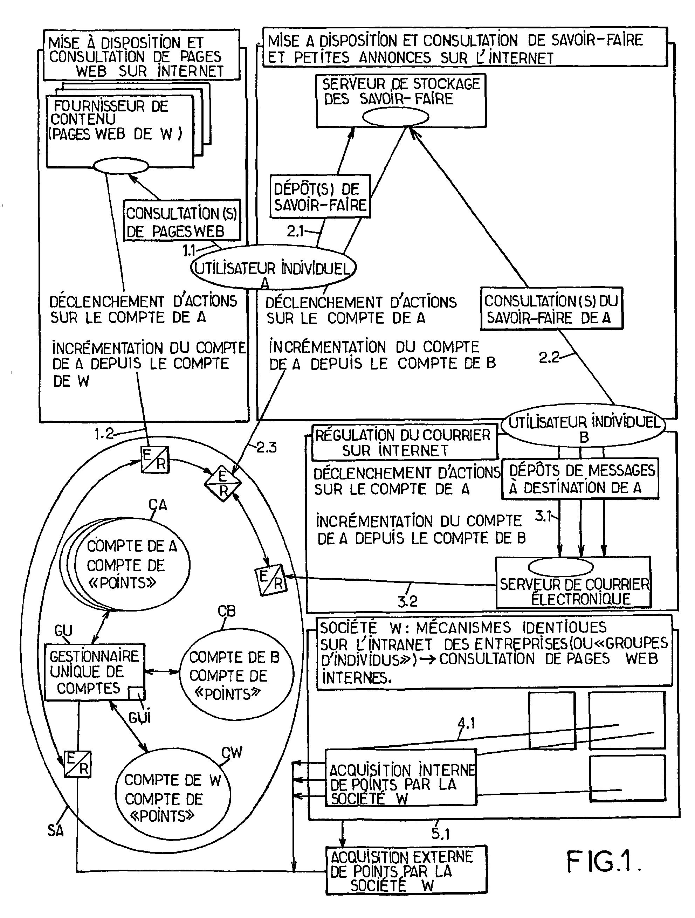

Une description plus détaillée d'un système de régulation des flux d'échange de courrier électronique et d'accès à des sites en réseau, conforme à l'objet de la présente invention, sera maintenant donnée en liaison avec la figure 1.

Sur la figure 1 précitée, on a représenté un système de régulation des flux d'échange de messages de courrier électronique et/ou d'accès à un site en réseau conforme à l'objet de la présente invention, ce système de régulation étant destiné à assurer la régulation précitée au niveau général d'un réseau, c'est-à-dire sur une partie substantielle de celui-ci.

Par partie substantielle du réseau, on entend par exemple toute partie de réseau permettant la gestion d'adresses électroniques ou de sites électroniques présentant la même extension .com, .fr ou analogue.

Pour cette raison, sur la figure 1, on a représenté un serveur d'accès SA permettant à tout utilisateur, utilisateur individuel A, utilisateur individuel B ou respectivement groupe d'utilisateurs interconnectés par un réseau local, dit réseau INTRANET, dans le cadre d'une société commerciale, utilisateur W, elle-même interconnectée au serveur d'accès SA.

Dans le cadre de l'exposé du système de régulation des flux d'échange de messages de courrier électronique et/ou d'accès à un site en réseau, objet de la présente invention, les utilisateurs A, B respectivement W, seront affectés de rôles distincts afin de permettre un exposé plus détaillé dans la présente description.

Ainsi que mentionné précédemment, l'utilisateur individuel A est réputé destinataire d'un message dans le cadre de la description du système objet de la présente invention.

A titre d'exemple non limitatif, on indique toutefois que cet utilisateur individuel A a préalablement déposé un savoir-faire ou un savoir-être sur un serveur de stockage des savoir-faire par une opération portant la référence 2.1 de dépôt de savoir-faire, ce savoir-faire pouvant être consulté par exemple par l'utilisateur individuel B.

L'utilisateur individuel A est également réputé procéder à la consultation de pages WEB sur un site en réseau, tel qu'un site INTERNET quelconque, par une opération de consultation de pages WEB auprès d'un fournisseur de contenu des pages WEB précitées, lesquelles auront pu être fournies par l'entreprise ou la société commerciale W. L'opération de consultation des pages WEB porte la référence 1.1 par exemple.

De la même manière, l'utilisateur individuel B peut procéder à l'émission et au dépôt de messages à destination de l'utilisateur A dans une opération portant la référence 3.1 auprès d'un serveur de courrier électronique.

Ainsi que représenté sur la figure 1, le système objet de la présente invention, comporte au moins, implanté au niveau de chaque serveur d'accès au réseau, et en particulier au serveur d'accès représenté et désigné par SA, un module de contrôle de réception, noté R, de messages par un destinataire, ce module de contrôle de réception permettant, lors de la réception de tout message, que ce soit un message de courrier électronique et/ou un message d'accès ou de réponse à un accès à un site en réseau, de déclencher une action spécifique de régulation de réception de ces messages en fonction de l'origine de ces derniers.

En outre, ainsi que représenté en figure 1, le système objet de l'invention comprend au moins un module de contrôle d'émission de messages E par un émetteur, tel que l'utilisateur B par exemple, ce ou ces modules E permettant, lors de l'émission de tout message à l'attention d'au moins un destinataire, qu'il s'agisse d'un destinataire de courrier électronique ou d'un destinataire de message d'accès à un site en réseau, tel que l'utilisateur A, de déclencher une action spécifique de régulation d'émission de messages en fonction de critères de choix de ces destinataires.

Sur la figure 1, on a représenté, à titre d'exemple non limitatif, une pluralité de modules de contrôle de réception de messages R et de modules de contrôle d'émission de messages E. On comprend en particulier qu'en fonction de l'architecture du serveur d'accès SA, les modules de contrôle de réception de messages R, respectivement d'émission de messages E, peuvent être regroupés en un seul et même module, le cas échéant en plusieurs modules, afin d'assurer le traitement d'une pluralité de messages transmis au serveur d'accès SA.

Indépendamment de l'architecture, parallèle ou non, des modules de contrôle de réception de messages R, respectivement des modules de contrôle d'émission de messages E, ces derniers sont assujettis à un module GU, gestionnaire unique de compte utilisateur. Un compte de points de pénalité, respectivement de bonification, par utilisateur est également prévu au niveau du serveur d'accès SA par utilisateur, chaque compte, pour cette raison, étant référencé CA pour l'utilisateur individuel A, CB pour l'utilisateur individuel B, respectivement CW pour l'utilisateur société commerciale W.

En ce qui concerne l'architecture des modules de contrôle de réception de messages R, respectivement des modules de contrôle d'émission de messages E, on indique que chaque module peut comporter une partie logicielle destinée à détecter tout message accédant au serveur d'accès SA et destiné à re-diriger ce message vers le gestionnaire unique de comptes GU, et une partie logicielle fonctionnelle destinée à réaliser l'ensemble des fonctions de chaque module de contrôle de réception de messages R, respectivement de contrôle d'émission de messages E au niveau du gestionnaire unique de comptes GU.

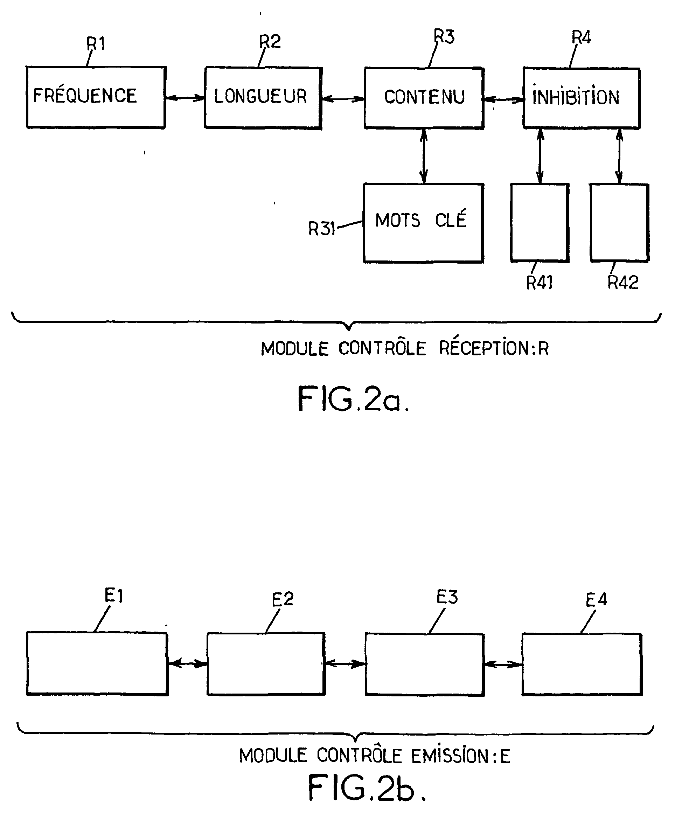

Une description plus détaillée d'un module de contrôle de réception R sera maintenant donnée en liaison avec la figure 2a.

En référence à la figure précitée, on indique que le module de contrôle de réception R comprend avantageusement un module R₁ de contrôle de la fréquence des messages émis par chaque émetteur de messages, à l'attention d'un destinataire.

Le module de contrôle de réception de messages R comporte également un module R₂ de contrôle de la longueur des messages émis par chaque émetteur de messages à l'attention d'un destinataire, tel que le destinataire A. Le contrôle de la longueur des messages s'entend soit de la longueur du texte principal de ce dernier, soit du nombre de pièces jointes, ou encore du volume global du message.

En outre, en référence à la figure 2a, on indique que le module de réception de messages R comporte un module de contrôle du contenu des messages émis par chaque émetteur de messages à l'attention d'un destinataire, le destinataire A par exemple, ce module portant la référence R₃.

En outre, une base de données portant la référence R₃₁ est directement reliée au module de contrôle du contenu de messages R₃, cette base de données R₃₁ comportant des mots clé et pouvant être constituée à l'initiative du destinataire, le destinataire A par exemple. En effet, le destinataire A est en mesure de constituer une, ou le cas échéant, plusieurs bases de données en fonction des centres d'intérêt de son activité et en particulier des messages qu'il est susceptible de recevoir de la part de n'importe quel émetteur. Les mots clé peuvent être subdivisés en des bases de données distinctes relatives, soit à l'activité professionnelle, soit à l'activité personnelle, et, dans le cadre de cette activité professionnelle ou personnelle, à différents secteurs de celle-ci.

Enfin, le module de contrôle de réception de messages R comporte, ainsi que représenté sur la figure 2a, un module d'inhibition de la réception de messages à l'attention d'un destinataire, tel que le destinataire A, ce module portant la référence R₄.

A titre d'exemple non limitatif, on indique que le module d'inhibition de la réception de messages R₄ peut être associé à un module d'identification de l'émetteur du message, tel que l'utilisateur B dans l'exemple précité, ce module d'identification portant la référence R₄₁ et pouvant consister, à titre d'exemple non limitatif, en un système de lecture de l'adresse électronique de l'émetteur B.

En outre, un module d'évaluation d'un critère de réticence à la lecture de messages émanant de cet émetteur B par le destinataire A peut également être associé au module d'inhibition de la réception de messages R₄. Le module d'évaluation de critères porte la référence R₄₂.

En ce qui concerne le module de contrôle d'émission de messages vers un destinataire, module E tel que représenté en figure 2b, celui-ci peut comporter un module E₁ de calcul d'un coefficient de réceptivité du destinataire aux messages envoyés par l'émetteur, ainsi qu'un module E₂ d'affichage d'un avertissement de réceptivité du destinataire A à l'attention de l'émetteur, tel que l'utilisateur B.

Les modules E₁ et E₂ précités peuvent être complétés par un module E₃ de mise en communication téléphonique de l'émetteur B et du destinataire A en fonction de la valeur du coefficient de réceptivité calculé par le module E₂.

Enfin, le module de contrôle d'émission de messages E peut être muni d'une base de données E₄ relative à l'ensemble des destinataires ayant reçu au moins un message émis par l'émetteur, l'utilisateur B. La base de données précitée E₄ peut être gérée sur la base de critères de réponse des différents destinataires.

Enfin, le système objet de l'invention peut comporter, au niveau du module gestionnaire unique de comptes utilisateurs GU, un module d'incitation de chaque émetteur ou destinataire à respecter un code de conduite relatif à l'émission/réception de messages électroniques, respectivement de messages d'accès ou de réponse à accès à un site en réseau. Sur la figure 1, le module d'incitation de chaque émetteur ou destinataire est référencé GUI et est réputé, de manière non limitative, intégré au module gestionnaire unique de comptes GU.

Tout autre mode de réalisation, dans lequel le module d'incitation GUI n'est pas intégré au module gestionnaire unique de compte GU, ne sort pas du cadre de l'objet de la présente invention.

D'une manière générale, on indique que le code de bonne conduite précédemment cité consiste à définir, pour chaque émetteur, respectivement pour chaque destinataire, une pluralité de valeurs de seuil d'un ensemble de variables comportementales en nombre de messages émis ou de messages d'accès ou de réponse d'accès à des sites en réseau, en fonction de l'identité du destinataire, respectivement de l'émetteur.

Le module d'incitation GUI permet d'attribuer des points de bonification à tout émetteur ou destinataire dont au moins une variable comportementale est inférieure à une valeur de seuil correspondante, et à attribuer des points de pénalité à tout émetteur ou destinataire dont au moins une variable comportementale est supérieure à cette valeur de seuil.

Le mode opératoire général du système de régulation des flux d'échange de courrier électronique et d'accès ou de réponse d'accès à un site en réseau, objet de la présente invention, sera maintenant décrit ci-après. Le système objet de la présente invention permet la régulation en émission ou en réception dans le cadre du courrier électronique, ainsi que l'intégration de cette régulation vis-à-vis des autres composants du réseau INTERNET et du réseau INTRANET.

Dans le cadre de l'émission et de la réception de messages de courrier électronique, le système objet de l'invention permet d'inciter les différents acteurs, émetteurs et récepteurs de courrier électronique, à réguler leurs émissions et réceptions de courriers. Cette notion s'appuie donc sur une notion de déclenchement d'actions, lors de l'émission ou de la réception des courriers précités.

En partant du constat qu'un certain quota de courriers reçus par un individu :
- n'intéresse pas ce dernier au moment précis où il les reçoit ;
- ne l'intéresse pas du tout ;
- ne le concerne pas ;
- n'est pas lu du fait même que l'émetteur en est connu,
les modules des contrôle d'émission E, respectivement de réception R implantés au niveau du serveur d'accès SA permettent :
- pour le récepteur d'un message, de déclencher une action spécifique en fonction des actions entreprises par ceux qui émettent des messages vers ce dernier ; il s'agit par exemple de faire part à un émetteur, et ce, de manière automatique, qu'il est perçu comme trop bavard, trop curieux, et de l'en pénaliser ;
- pour l'émetteur d'un message, de déclencher une action spécifique en fonction des réactions des destinataires de ce message et, par exemple, de sélectionner parmi les destinataires précités ceux qui sont utiles et ceux qui le sont moins, selon qu'ils ont ou non répondu à des courriers antérieurs.

Ainsi, le système objet de l'invention permet à chaque propriétaire d'une boîte aux lettres de déterminer :

### En réception

que si un émetteur lui envoie plus de M messages pendant une période P donnée, et que le titulaire de la boîte de réception, ou boîte aux lettres, n'en a lu aucun, alors, il y a lieu de déclencher une action particulière parmi, par exemple, les actions ci-après :
- identification spécifique de l'émetteur par l'intermédiaire du module R₄₁ précédemment mentionné en liaison avec la figure 2a,
- rejet pur et simple des courriers reçus ou à recevoir pendant la période par l'intermédiaire du module d'inhibition R₄ et du module R₄₂,
- pénalisation de l'émetteur en question par l'intermédiaire du module gestionnaire unique de compte GU,
ainsi qu'il sera décrit ultérieurement dans la description.

### En émission

que s'il émet un ou plusieurs messages à destination d'un même destinataire et que ce dernier n'y répond pas, alors, il y a lieu de déclencher une action spécifique, telle que :
- indication particulière sur le terminal de l'émetteur, terminal téléphonique muni d'un afficheur ou ordinateur personnel ;
- tentative de communication téléphonique entre les deux utilisateurs, émetteur et destinataire ;
- enregistrement des caractéristiques du destinataire dans un fichier ou une base de données, fichier de ceux qui ne répondent jamais, fichier de ceux qui ne sont pas intéressés, pour une utilisation ultérieure.

En ce qui concerne l'intégration de cette régulation dans les autres composantes de l'accès à des sites en réseau, le système objet de l'invention permet, grâce à l'incitation des différents acteurs, émetteur et récepteur de courrier électronique notamment, à adopter une déontologie pour le bon emploi du courrier électronique et des accès et réponses à accès aux sites en réseau, la mise en oeuvre d'une méthodologie s'appuyant sur une notion de récompense et de pénalité réservée à chaque utilisateur, notamment individuel.

Le mécanisme de régulation des flux de messages mis en oeuvre par le système objet de la présente invention s'appuie ainsi sur un mode opératoire plus général permettant :
■ aux utilisateurs individuels :
   - d'acquérir des points en visitant les sites en réseau par l'intermédiaire du réseau INTERNET et/ou INTRANET ;
   - d'acquérir des points en proposant leur savoir-faire aux autres utilisateurs du réseau INTERNET et/ou INTRANET par le biais de petites annonces ou de bonnes idées ;
   - d'acquérir des points en pénalisant leurs interlocuteurs par courrier électronique les moins respectueux des règles de déontologie ainsi institués ;
   - de faire gérer leur compte de points, points acquis globalement par obtention de bons points ou retrait de bons points correspondant à des pénalités par un intermédiaire unique, le fournisseur d'accès par exemple.
■ aux entreprises commerciales :
   - d'acheter des points auprès de cet intermédiaire unique ;
   - d'engendrer des points en interne, en mettant en place des systèmes tels que décrits précédemment, à savoir génération de points lors de l'accès au réseau INTRANET de l'entreprise ou génération de points en relation avec le bon usage du courrier électronique interne ;
   - de distribuer ces points en les attribuant aux utilisateurs individuels qui visitent leur site INTERNET.

Un exemple de processus opératoire spécifique sera maintenant donné en liaison avec la figure 1 dans le cadre des hypothèses ci-après. Le mode opératoire est celui qui correspond à la mise en oeuvre d'un gestionnaire unique de comptes GU, lequel permet de gérer directement chaque compte client utilisateur, utilisateur A, utilisateur B et utilisateur W, ainsi que mentionné précédemment dans la description.

Le premier exemple de mise en oeuvre correspond à une mise à disposition et consultation de pages WEB sur le réseau INTERNET. Cette mise en oeuvre est décomposée en deux étapes, notées 1.1 respectivement 1.2 dans laquelle l'utilisateur individuel A consulte les pages WEB de la société commerciale W par exemple.
Suite à la consultation des pages WEB précitées, une opération de déclenchement d'actions prédéfinies sur le compte de A est réalisée par incrémentation du compte CA de points de l'utilisateur A depuis le compte utilisateur de W. A partir du déclenchement de l'action, prédéfinie sur le compte de A, c'est-à-dire par l'opération 1.2, le gestionnaire unique de comptes GU procède à la mise à jour des comptes de W et de A par allocation d'un nombre de points correspondants au bénéfice de A crédité du nombre de points correspondants vis-à-vis du compte de W débité du même nombre de points correspondants.

Un autre exemple de mise en oeuvre concerne la mise à disposition et consultation de savoir-faire des petites annonces sur le réseau INTERNET.
Cette mise en oeuvre est décomposée en trois étapes notées 2.1 de dépôt de savoir-faire ou de savoir-être par l'utilisateur individuel A sur un serveur de stockage de savoir-faire, cette opération étant suivie d'une opération notée 2.2 de consultation du savoir-faire déposé par A au niveau du serveur de stockage de savoir-faire par l'utilisateur individuel B. Suite à cette opération de consultation, une opération de déclenchement d'action prédéfinie sur le compte de A est réalisée à l'opération 2.3, cette action prédéfinie pouvant correspondre par exemple à une action d'incrémentation du compte utilisateur de A à partir du compte utilisateur de B, cette opération étant bien entendu réalisée par l'intermédiaire du gestionnaire unique de comptes GU mettant à jour les comptes respectifs de A et B.

Le troisième exemple de mise en oeuvre concerne la régulation du courrier électronique, par exemple, laquelle peut être réalisée par l'intermédiaire de deux actions, référencées 3.1 et 3.2 sur la figure 1.
Au cours de l'action 3.1, l'utilisateur B dépose un message électronique à destination de l'utilisateur A. L'action 3.2 correspond à un déclenchement d'action prédéfinie sur le compte utilisateur CA de l'utilisateur A.
Dans l'exemple de réalisation précité, l'utilisateur A est représenté uniquement comme récepteur de messages émis par l'utilisateur B. Il peut toutefois être ici considéré comme émetteur de messages à destination de l'utilisateur B par exemple. Dans un tel cas, l'action référencée 3.2 pourrait alors correspondre à un déclenchement d'action en faveur de l'utilisateur A du fait que B, par exemple, n'ait pas répondu à ses messages.

Le quatrième exemple de mise en oeuvre sur la figure 1 correspond à l'extrapolation des trois exemples de mise en oeuvre précédents, dans le cadre cette fois d'une société commerciale ou entreprise par l'intermédiaire de son réseau INTRANET. On comprend en particulier que les mécanismes sont sensiblement identiques sur le réseau INTRANET des entreprises commerciales, ou groupes d'individus.
Ce quatrième exemple de mise en oeuvre est représenté par deux actions : une action référencée 4.1 correspondant à une acquisition interne de points par la société W, et une action référencée 5.1 correspondant à une acquisition externe de points par la société W.

Dans les quatre exemples de mise en oeuvre précités, on indique que, d'une part, les mécanismes mis en oeuvre au sein d'un réseau INTRANET d'entreprise commerciale sont les mêmes que ceux mis en oeuvre au niveau du réseau INTERNET, alors que, d'autre part, les opérations précitées sont fédérées par le gestionnaire unique de comptes GU implanté au niveau du serveur d'accès SA.

Dans les exemples de réalisation précités, l'utilisateur A, utilisateur individuel, dispose ainsi d'un compte de points, le compte CA. La notion de compte de points regroupe celle d'avantages, récompense, rémunération, cités précédemment dans la description. Pour l'utilisateur A, les actions déclenchées dans l'ensemble de ces situations sont des incrémentations du compte de points utilisateur A, CA. D'autres actions peuvent bien entendu être envisagées et déclenchées, telles que tentative de communication téléphonique, indication particulière sur le terminal de l'utilisateur A, gestion de listes noires ou de listes blanches pour l'utilisateur A précité.

Un récapitulatif de l'ensemble des possibilités fournies par le système de régulation des flux d'échange de courrier électronique et d'accès à un site en réseau conforme à l'objet de la présente invention est introduit ci-après dans la description, par l'intermédiaire de tableaux relativement :
- à la régulation du courrier électronique en tant que destinataire, par l'intermédiaire des tableaux T1, T2 et T3 ;
- à la régulation du courrier électronique en tant qu'émetteur, par l'intermédiaire des tableaux T4, T5 ;
- à la mise à disposition et consultation de pages WEB sur le réseau INTERNET, par l'intermédiaire du tableau T6 ;
- à la mise à disposition et consultation de savoir-faire et de petites annonces sur le réseau INTERNET, par l'intermédiaire du tableau T7 ;
- par l'intermédiaire de mécanismes identiques sur le réseau INTRANET des entreprises ou groupes d'individus, par consultation de pages WEB interne, savoir-faire interne ou de messagerie interne, par l'intermédiaire du tableau T8.

### La régulation du courrier électronique en tant que destinataire

### A) Contrôle des émetteurs de messages :

**TABLEAU T1**

| | | |
|---|---|---|
| | A a indiqué au serveur SA que B est "trop bavard". Si B lui transmet M messages au moins dans un délai de P jours, alors A demande à ce que B soit prévenu, voire "sanctionné" | |
| B envoie un premier message à A | A ne lit pas | |
| B envoie un second message à A | A ne lit pas | |
| B envoie un troisième message à A | A ne lit pas | Le serveur SA détecte |
| | | ■ que A a reçu M messages successifs de B (ici M = 3) |
| | | ■ et que A ne les a pas lus |
| | | En fonction de ce que A a demandé : |
| | | ■ le serveur SA déclenche cette action (par exemple, attribue des points au compte de A, points qui sont retirés du compte de B) |
| | | Le serveur SA prévient B de l'action demandée par A. (Par exemple, le serveur SA prévient B que A le trouve "trop bavard" et que des points vont être débités de son compte au profit de A). |

### B) Contrôle des émetteurs de messages et rejet des messages :

**TABLEAU T2.**

| | | |
|---|---|---|
| | A a indiqué au serveur SA que B est "indésirable". Dans un premier temps, si B transmet un message à A, A demande à ce que B soit prévenu qu'il est indésirable. Dans un second temps, si B insiste, A demande à ce que B soit "sanctionné". | |
| B envoie un message à A | / | Le serveur SA détruit le message sans le transmettre à A. |
| | | Le serveur SA prévient B que A le trouve "indésirable". |
| B envoie un message à A | / | Le serveur SA attribue donc des points au compte de A, points qui sont retirés du compte de B. |

### C) Contrôle des émetteurs de messages et identification :

**TABLEAU T3.**

| | | |
|---|---|---|
| | A a indiqué au serveur SA que B n'est "pas correct". Si B lui transmet un message, alors A demande à ce que ce message soit clairement identifié comme "pas correct". | |
| B envoie un message à A | | Le serveur SA détecte que pour A, B est déclaré "pas correct". |
| | | Le serveur SA agrémente le message de B d'une indication signifiant "pas correct". |
| | | En fonction de ce que A a demandé, le serveur SA transmet ou non le message vers A. |
| | | Le serveur SA fait éventuellement les transferts de points nécessaires dans les cas A) ou B) selon que B est désigné comme "trop bavard" ou "indésirable". |

### La régulation du courrier électronique en tant qu'émetteur

### A) Contrôle des destinataires et déclenchement d'action :

■ 1er cas :

**TABLEAU T4.**

| | | |
|---|---|---|
| A a indiqué au serveur SA que B est connu et mérite une attention particulière. Si A lui transmet N messages et que B n'y répond pas, A demande à ce qu'une action particulière soit déclenchée.. | | |
| A envoie un premier message à B | B n'y répond pas | |
| A envoie un deuxième message à B | B n'y répond pas | |
| A envoie un troisième message à B | B n'y répond pas | Le serveur SA détecte : |
| | | ■ que A a transmis N messages à B (ici N = 3) |
| | | ■ que B n'a jamais répondu. Le serveur SA déclenche alors l'action particulière demandée par A, par exemple : |
| | | ■ tentative de communication téléphonique entre A et B, |
| | | ■ enregistrement des coordonnées de B dans un fichier ou une base de données (par exemple, un fichier des clients "non intéressés") |
| | | ■ etc. |

■ 2ème cas :

**TABLEAU T5.**

| | | |
|---|---|---|
| A a indiqué au serveur SA que son ou ses destinataires méritent une attention particulière. Si A leur transmet un message, alors A demande à ce qu'une action particulière soit déclenchée pour tous ceux qui n'ont pas répondu dans un délai prédéfini. | | |
| A envoie un message à un ou plusieurs destinataires. | Certains de ces destinataires n'y répondent pas dans le délai | Le serveur SA déclenche alors l'action particulière demandée par A, par exemple : |
| | | ■ relance en réémettant le message vers ceux qui n'ont pas répondu, |
| | | ■ enregistrement des coordonnées des destinataires n'ayant pas répondu dans un fichier ou une base de données (par exemple, un fichier des mauvais payeurs, un fichier des clients "non intéressés") |

### Mise à disposition et consultation des pages WEB sur le réseau INTERNET

**TABLEAU T6**

| | | |
|---|---|---|
| | L'entreprise W a acquis des points auprès du gestionnaire unique de comptes GU | |
| | L'entreprise W a indiqué au fournisseur de contenu qui gère ses pages WEB que chaque consultation de son site WEB par un internaute rapporte des points à cet internaute. | |
| A consulte le site WEB de la société W | | Le fournisseur de contenu détecte que A a consulté les pages WEB de la société W. Le fournisseur de contenu attribue donc des points au compte de A, points qui sont retirés du compte de l'entreprise W. |

### Mise à disposition et consultation de savoir-faire et petites annonces sur le réseau INTERNET

**TABLEAU T7**

| | | |
|---|---|---|
| A dépose une contribution sur un serveur de savoir-faire. | | |
| Elle y indique : | | |
| ■ qu'elle a des compétences et connaissances particulières sur un domaine précis, | | |
| ■ que ce savoir-faire vaut X points. | | |
| | B consulte le savoir-faire de A | |
| | | Le serveur de savoir-faire détecte que B a consulté le savoir de A. X points sont donc attribués au compte de A, ces points étant retirés du compte de B. |

### Mécanismes identiques sur le réseau INTRANET des entreprises (ou groupes d'individus) → consultation des pages WEB internes, savoir-faire interne, messagerie interne

**TABLEAU T8**

| | | |
|---|---|---|
| | L'entreprise W a mis en place sur son réseau INTRANET des principes identiques à ceux décrits en T1, T2, T3, T4, T5, T6, T7. | |
| Un employé A consulte le savoir-faire d'un employé B. | | L'entreprise W considère qu'elle pourra dépenser X points au profit des internautes qui visitent son site WEB. |
| Un employé C consulte les pages WEB de l'entreprise W. | | L'entreprise W considère qu'elle pourra dépenser Y points au profit des internautes qui visitent son site WEB. |
| Un employé D respecte les règles de la messagerie interne (par exemple, pas plus de 5 destinataires, pas de message sans réponse, etc.). | | L'entreprise W considère qu'elle pourra dépenser Z points au profit des internautes qui visitent son site WEB. |
| | L'entreprise W acquiert donc X+Y+Z points auprès du gestionnaire unique de comptes GU. | |
| | Ces points sont alors distnbuables, par l'intermédiaire du gestionnaire unique de comptes, aux internautes qui visitent le site WEB externe de la société W. (voir le tableau T6). | |

## Revendications

1. Système de régulation des flux d'échange de messages de courrier électronique et/ou d'accès à un site en réseau, **caractérisé en ce qu'**il comporte au moins, implantés au niveau des serveurs d'accès :
- des moyens de contrôle de réception de messages par un destinataire, ce contrôle étant conforme à une indication préalable fournie par le destinataire et permettant, lors de la réception de tout message, de déclencher une action spécifique de régulation de réception des messages, en fonction de l'origine de ces messages ; et
- des moyens de contrôle d'émission de messages par un émetteur, ce contrôle étant conforme à une indication préalable fournie par l'émetteur et permettant, lors de l'émission de tout message à l'attention d'au moins un destinataire, de déclencher une action spécifique de régulation d'émission de messages, en fonction de critères de choix de ces destinataires.

2. Système selon la revendication 1, **caractérisé en ce que** lesdits moyens de contrôle de réception de messages comportent des moyens de contrôle de la fréquence des messages émis par chaque émetteur de message à l'attention d'un destinataire.

3. Système selon la revendication 1 ou 2, **caractérisé en ce que** lesdits moyens de contrôle de réception de messages comportent des moyens de contrôle de la longueur des messages émis par chaque émetteur de message à l'attention d'un destinataire.

4. Système selon l'une des revendications 1 à 3, **caractérisé en ce que** lesdits moyens de contrôle de réception de messages comportent des moyens de contrôle du contenu des messages émis par chaque émetteur de message à l'attention d'un destinataire, par comparaison du contenu de chaque message à un ensemble de mots clé mémorisés dans une base de données.

5. Système selon l'une des revendications 1 à 4, **caractérisé en ce que** lesdits moyens de contrôle de réception de messages comportent en outre des moyens d'inhibition de la réception de messages à l'attention d'un destinataire, sur critère d'identification de l'émetteur de ce message et évaluation d'un critère de réticence à la lecture de messages émanant de cet émetteur par le destinataire.

6. Système selon l'une des revendications 1 à 5 précédentes, **caractérisé en ce que** lesdits moyens de contrôle d'émission de messages vers un destinataire comportent au moins des moyens de calcul d'un coefficient de réceptivité dudit destinataire aux messages envoyés par l'émetteur.

7. Système selon la revendication 6, **caractérisé en ce qu'**il comporte en outre des moyens d'affichage d'un avertissement de réceptivité du destinataire à l'attention de cet émetteur.

8. Système selon la revendication 6 ou 7, **caractérisé en ce que** celui-ci comporte en outre des moyens de mise en communication téléphonique de l'émetteur et du destinataire, en fonction de la valeur dudit coefficient de réceptivité.

9. Système selon l'une des revendications 1 à 8, **caractérisé en ce que** lesdits moyens de contrôle d'émission de messages vers un destinataire comportent en outre une base de données relative à l'ensemble des destinataires ayant reçu au moins un message émis par l'émetteur, ladite base de données étant gérée sur la base de critères de réponse desdits destinataires.

10. Système selon l'une des revendications 1 à 9, **caractérisé en ce que** celui-ci comporte en outre des moyens d'incitation de chaque émetteur ou destinataire à respecter un code de conduite relatif à l'émission/réception de messages électroniques, respectivement d'accès à un site en réseau, le code de bonne conduite consistant à définir, pour chaque émetteur respectivement destinataire, une pluralité de valeurs de seuil d'un ensemble de variables comportementale en nombre de messages émis ou d'accès, respectivement de messages reçus ou de retours d'accès, en fonction de l'identité du destinataire respectivement de l'émetteur, lesdits moyens d'incitation consistant à attribuer des points de bonification à tout émetteur, respectivement destinataire, dont au moins une variable comportementale est inférieure à une valeur de seuil correspondante et à attribuer des points de pénalité à tout émetteur, respectivement destinataire, dont au moins une variable comportementale est supérieure à cette valeur de seuil.

11. Système selon la revendication 10, **caractérisé en ce que** lesdits moyens d'incitation comportent :
- un module gestionnaire unique de comptes utilisateurs ;
- un compte de points de pénalité respectivement de bonification par utilisateur, chaque compte étant géré par ledit gestionnaire unique de comptes.

## Patentansprüche

1. System zur Regelung der Austauschflüsse von E-Mail-Meldungen und/oder Netzwerkort-Zugriffsmeldungen, **dadurch gekennzeichnet, dass** es an den Zugriffsservern wenigstens umfasst:
- Mittel zur Kontrolle des Empfangs von Meldungen durch einen Empfänger, wobei diese Kontrolle gemäß einer vorab von dem Empfänger gelieferten Angabe ist und es erlaubt, beim Empfang jeder Meldung eine spezifische Aktion zur Regelung des Empfangs von Meldungen in Abhängigkeit vom Ursprung dieser Meldungen auszulösen;
- Mittel zur Kontrolle des Sendens von Meldungen durch einen Sender, wobei diese Kontrolle gemäß einer vorab vom Sender gelieferten Angabe ist und es erlaubt, beim Senden jeder Meldung an wenigstens einen Empfänger eine spezifische Aktion zur Regelung des Sendens von Meldungen in Abhängigkeit von Auswahlkriterien dieser Empfänger auszulösen.

2. System nach Anspruch 1, **dadurch gekennzeichnet, dass** die Mittel zur Kontrolle des Empfangs von Meldungen Mittel zur Kontrolle der Häufigkeit der von jedem Sender einer Meldung an einen Empfänger gesendeten Meldungen umfassen.

3. System nach Anspruch 1 oder 2, **dadurch gekennzeichnet, dass** die Mittel zur Kontrolle des Empfangs von Meldungen Mittel zur Kontrolle der Länge der von jedem Sender von Meldungen an einen Empfänger gesendeten Meldungen umfassen.

4. System nach einem der Ansprüche 1 bis 3, **dadurch gekennzeichnet, dass** die Mittel zur Kontrolle des Empfangs von Meldungen Mittel zur Kontrolle des Inhalts der von jedem Sender einer Meldung an einen Empfänger gesendeten Meldungen durch Vergleichen des Inhalts jeder Meldung mit einer Menge von in einer Datenbank gespeicherten Schlüsselwörtern umfassen.

5. System nach einem der Ansprüche 1 bis 4, **dadurch gekennzeichnet, dass** die Mittel zur Kontrolle des Empfangs von Meldungen ferner Mittel zum Sperren des Empfangs von an einen Empfänger gerichteten Meldungen anhand eines Identifikationskriteriums des Senders dieser Meldung und einer Bewertung eines Kriteriums der Unwilligkeit des Empfängers, von diesem Sender herrührende Meldungen zu lesen, umfassen.

6. System nach einem der vorhergehenden Ansprüche 1 bis 5, **dadurch gekennzeichnet, dass** die Mittel zur Kontrolle des Sendens von Meldungen an einen Empfänger wenigstens Mittel zum Berechnen eines Empfangsbereitschaftskoeffizienten des Empfängers für von dem Sender gesendete Meldungen umfassen.

7. System nach Anspruch 6, **dadurch gekennzeichnet, dass** es ferner Mittel zum Anzeigen eines Hinweises auf die Empfangsbereitschaft des Empfängers zur Kenntnisnahme durch den Sender umfasst.

8. System nach Anspruch 6 oder 7, **dadurch gekennzeichnet, dass** es ferner Mittel zum Herstellen einer Telefonverbindung des Senders und des Empfängers in Abhängigkeit vom Wert des Empfangsbereitschaftskoeffizienten umfasst.

9. System nach einem der Ansprüche 1 bis 8, **dadurch gekennzeichnet, dass** die Mittel zur Kontrolle des Sendens von Meldungen an einen Empfänger ferner eine Datenbank betreffend die Menge der Empfänger, die wenigstens eine von dem Sender gesendete Meldung empfangen haben, umfassen, wobei diese Datenbank auf der Grundlage von Antwortkriterien der Empfänger verwaltet ist.

10. System nach einem der Ansprüche 1 bis 9, **dadurch gekennzeichnet, dass** es ferner Mittel zum Veranlassen jedes Senders oder Empfängers, einen das Senden/Empfangen von elektronischen Meldungen bzw. Netzwerkort-Zugangsmeldungen betreffenden Verhaltenskodex einzuhalten, umfasst, wobei der Verhaltenskodex darin beruht, für jeden Sender bzw. Empfänger eine Mehrzahl von Schwellwerten einer Menge von Verhaltensvariablen abhängig von der Zahl von gesendeten oder empfangenen Meldungen bzw. von empfangenen Meldungen oder Zugriffsrückmeldungen in Abhängigkeit von der Identität des Empfängers bzw. des Senders zu definieren, wobei die Mittel zum Veranlassen darin beruhen, Vergütungspunkte jedem Sender bzw. Empfänger zuzuweisen, von dem wenigstens eine Verhaltensvariable unter einem entsprechenden Schwellwert ist, und Strafpunkte jedem Sender bzw. Empfänger zuzuweisen, von dem wenigstens eine Verhaltensvariable über diesem Schwellwert ist.

11. System nach Anspruch 10, **dadurch gekennzeichnet, dass** die Mittel zum Veranlassen umfassen:
- ein einheitliches Verwaltungsmodul für Benutzerkonten;
- ein Straf- bzw. Vergütungspunktekonto pro Benutzer, wobei jedes Konto durch die einheitliche Kontenverwaltung verwaltet ist.

## Claims

1. A system for regulating electronic mail message exchange flows and/or accessing to a networked site, **characterized in that** it comprises at least, installed at the access servers:
- means for controlling the reception of messages, by a recipient, such control being in accordance with a prior indication provided by the recipient and making it possible, during the reception of any message, to trigger a specific action of regulating reception of the messages, as a function of the origin of these messages; and
- means for controlling the sending of messages, by a sender, such control being in accordance with a prior indication provided by the sender and making it possible, during the sending of any message destined for at least one recipient, to trigger a specific action of regulating sending of messages, as a function of criteria of choice of these recipients.

2. The system as claimed in claim 1, **characterized in that** said means for controlling the reception of messages comprise means for controlling the frequency of the messages sent by each message sender destined for a recipient.

3. The system as claimed in claim 1 or 2, **characterized in that** said means for controlling the reception of messages comprise means for controlling the length of the messages sent by each message sender destined for a recipient.

4. The system as claimed in one of claims 1 to 3, **characterized in that** said means for controlling the reception of messages comprise means of control of the content of the messages sent by each message sender destined for a recipient, by comparing the content of each message with a set of key words stored in a database.

5. The system as claimed in one of claims 1 to 4, **characterized in that** said means for controlling the reception of messages further comprise means of disabling of the reception of messages destined for a recipient, upon a criterion of identification of the sender of this message and evaluation of a criterion of reluctance to read messages emanating from this sender by the recipient.

6. The system as claimed in one of the preceding claims 1 to 5, **characterized in that** said means for controlling the sending of messages to a recipient comprise at least means for calculating a coefficient of receptivity of said recipient to the messages dispatched by the sender.

7. The system as claimed in claim 6, **characterized in that** it further comprises means for displaying a notification of receptivity of the recipient destined for this sender.

8. The system as claimed in claim 6 or 7, **characterized in that** it further comprises means for placing the sender and the recipient in telephonic communication, as a function of the value of said coefficient of receptivity.

9. The system as claimed in one of claims 1 to 8, **characterized in that** said means for controlling the sending of messages to a recipient further comprise a database relating to the entire set of recipients who have received at least one message sent by the sender, said database being managed on the basis of criteria of reply of said recipients.

10. The system as claimed in one of claims 1 to 9, **characterized in that** it further comprises means of enticement of each sender or recipient to comply with a code of conduct relating to the sending/receiving; of electronic messages, respectively of access to a networked site, the code of proper conduct consisting in defining, for each sender, respectively recipient, a plurality of threshold values of a set of behavioral variables pertaining to the number of messages sent or of accesses, respectively of messages received or of access returns, as a function of the identity of the recipient, respectively of the sender, said means of enticement consisting in allocating bonus points to any sender, respectively recipient, for which at least one behavioral variable is less than a corresponding threshold value and in allocating penalty points to any sender, respectively recipient, for which at least one behavioral variable is greater than this threshold value.

11. The system as claimed in claim 10, **characterized in that** said means of enticement comprise:
- a single manager module for user accounts;
- an account of penalty respectively bonus points per user, each account being managed by said single manager of accounts.
